# EUROPÄISCHE PATENTANMELDUNG

(11) **EP 0 675 026 A1**
(43) Veröffentlichungstag der Anmeldung: **04.10.1995**
(21) Anmeldenummer: 95103300.0
(22) Anmeldetag: 08.03.1995
(51) Int. Cl.: B60R 21/20

(54) **Airbagabdeckung**

(30) Priorität: 29.03.1994 DE 4410889
(71) Anmelder: ADAM OPEL AG, D-65423 Rüsselsheim (DE)
(72) Erfinder: Rick, Ulrich, Dipl.-Ing., D-55595 Roxheim (DE); Klenk, Jürgen, Dipl.-Ing., D-65468 Geinsheim (DE); Raps, Elke, D-65428 Rüsselsheim (DE)
(74) Vertreter: Kümpfel, Heinz, Dipl.-Ing.

(57) **Zusammenfassung**

Die Erfindung bezieht sich auf eine an der Armaturentafel eines Kraftfahrzeuges befindliche Airbagabdeckung, bei welcher ein Abdeckungskörper (4) bei Aktivierung des Airbags an einer Mittelnaht (7) aufreißt und eine obere Teilabdeckung (5) sowie eine untere Teilabdeckung (6) um Biegescharniere (18 und 19) schwenken und so einen Durchtritt für den sich entfaltenden Airbag freigeben. Der Abdeckungskörper (4) besteht aus einem Hartschaumkörper (12), der mit metallischen Verstärkungen (8, 9) versehen ist und der an der Sichtseite mit einer Abdeckfolie (13) bezogen. An der Mittelnaht (7) bildet eine Einkerbung (15) im Hartschaumkörper (12) sowie eine Reißnaht (14) in der Abdeckfolie (13) eine Sollbruchstelle. Die Reißnaht (14) verläuft nicht über die gesamte Breite des Abdeckungskörpers (4), sondern es bleiben nahe der Ränder (16) in der Abdeckfolie (13) Bereiche (17), an denen die Reißnaht (14) nicht ausgeführt ist. Beim Aktivieren des Airbags wird sich so der Initialriß etwa von der Mitte der Mittelnaht (7) her nach beiden Seiten ausbreiten. Wenn der Riß nach einer Seite schneller als nach der anderen Seite verläuft, dann wird er an der schneller gerissenen Seite am Ende der Reißnaht (14) vor dem Bereich (17) verharren, bis auch an der anderen Seite der Riß die dortigen Bereiche (17) erreicht hat. Die endgültige Öffnung der Abdeckung erfolgt dann so gleichmäßig, daß sich der Airbag ohne Störung durch einseitiges Öffnen der Abdeckung entfalten kann.

## Beschreibung

Die Erfindung betrifft eine Airbagabdeckung aus einem relativ starren Abdeckungskörper und einer über diesen Abdeckungskörper angeordneten dekorativen Abdeckfolie, insbesondere eine Abdeckung, bei der die Ränder als Fuge zu der umliegenden Fläche, z. B. einer Armaturentafel, sichtbar sind und bei der nach Bersten einer Mittelnaht durch den sich aufblähenden Airbag eine obere und eine untere Teilabdeckung um ein oberes und ein unteres Biegescharnier aufschwenken und zwischen sich eine Durchtrittsöffnung für den Airbag freigeben.

Eine derartige Airbagabdeckung ist mit DE 41 15 884 A1 beschrieben. Bei dieser bekannten Abdeckung ist eine mittlere Reißnaht vorgesehen, die beidseits bis zum Rand verläuft. In der Mitte der Reißnaht sind schwächende Vertiefungen eingebracht, so daß sie beim Aktivieren des Airbags von der Mitte her beginnend schnell bis zu den Seiten über die gesamte Breite der Abdeckung aufreißt. Zusätzlich zu dieser Mittelnaht sind bei der bekannten Abdeckung senkrecht dazu verlaufende Seitennähte vorgesehen, welche gleichfalls aufreißen und damit die Schwenkbewegung der Teilabdeckungen um ihre Anlenkseiten ermöglichen.

Nachteilig bei einer solchen Abdeckung ist, daß das Durchreißen der Mittelnaht von der Mitte aus zu den einzelnen Rändern infolge von Toleranzen in der die Mittelnaht tragenden Folie unterschiedliche Zeiten beanspruchen kann. Dadurch klappen die Teilabdeckungen an einer Seite bereits auf, wenn sie an der anderen Seite durch die bisher nicht voll bis zum Rand durchgerissene Mittelnaht noch gehalten sind. Die Folge davon ist, daß sich der Airbag ungleichförmig entfaltet, nämlich zuerst an der Seite, bei der die Öffnung von der Abdeckung freigegeben ist und verzögert auf der anderen Seite. Dies kann die Wirkung des Airbags beeinträchtigen.

Aufgabe der Erfindung ist es, eine Airbagabdeckung der eingangs genannten Art derart zu verbessern, daß auch bei den üblichen Fertigungstoleranzen die Mittelnaht so aufreißt, daß sich der Airbag gleichmäßig entfalten kann.

Erfindungsgemäß wird diese Aufgabe dadurch gelöst, daß die Mittelnaht einerseits durch eine in der Abdeckfolie durch Schwächung des Querschnitts der Folie eingebrachte Reißnaht und andererseits durch eine gleichsinnig mit der Reißnaht verlaufende Einkerbung in dem Abdeckungskörper gebildet ist, wobei die Reißnaht nur annähernd bis zu den seitlichen Rändern des Abdeckungskörpers verläuft und so an jedem seitlichen Rand des Abdeckungskörpers ein schmaler Bereich ohne Reißnaht verbleibt. In vorteilhafter Weise kann die Reißnaht und/oder die Einkerbung in der Mitte des Abdeckungskörpers tiefer und damit schneller einreißend ausgeführt sein.

Eine so ausgebildete Abdeckung wird bei Aktivieren des Airbags zuerst in der Mitte der Mittelnaht aufbersten, wobei sich der Bruchverlauf sehr schnell den beiden Randbereichen nähert. Wenn die Reißgeschwindigkeit z. B. wegen Festigkeitsunterschieden im Verlauf der Mittelnaht infolge Material- oder Maßtoleranzen in eine Richtung größer als in die andere ist, dann wird der schneller verlaufende Rißfortschritt am Ende der in der Abdeckfolie vorgegebenen Reißnaht, also vor Erreichen des Randes der Abdeckung, verharren, bis auch der langsamere Rißfortschritt an das Ende der dort vorgegebenen Reißnaht gelangt. Da dann wieder ein Gleichgewicht der vom Airbag aufgebrachten Kraft an beiden Seiten der Abdeckung vorliegt, werden die noch unzerrissenen schmalen Stege der Abdeckfolie an beiden Seiten gleichzeitig aufgerissen, so daß sich die Teilabdeckungen nach außen um vorgegebenen Biegescharniere öffnen können. Der Airbag kann durch die so symmetrisch freigegebene Öffnung auch symmetrisch hindurchtreten und sich in gewünschter Weise auf dem Beifahrer hin entfalten.

Es hat sich gezeigt, daß durch die erfindungsgemäße Ausgestaltung der Abdeckung der Aufwand zur Führung des sich entfaltenden Airbags deutlich reduziert werden kann.

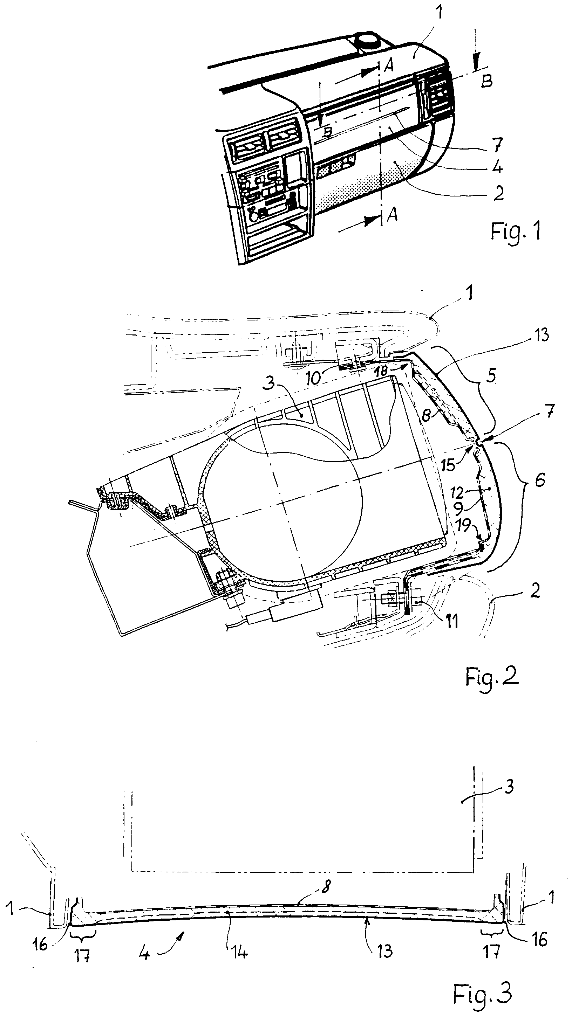

Ein Ausführungsbeispiel der Erfindung ist nachstehend anhand einer Zeichnung näher beschrieben. Es zeigen
- Fig. 1:: die dem Beifahrer zugewandte Seite einer Armaturentafel eines Kraftfahrzeuges;
- Fig. 2:: einen Schnitt entlang der Linie A - A in Fig. 1 in größerem Maßstab;
- Fig. 3:: einen schematisierten Schnitt entlang der Linie B - B in Fig. 1.

Gegenüber dem Sitz eines Beifahrers in einem Kraftfahrzeug befindet sich der Teil einer Armaturentafel 1, welcher ein Handschuhfach mit einem Handschuhfachdeckel 2 enthält und ein Beifahrerairbagmodul 3 überdeckt. Das Beifahrerairbagmodul 3 ist abgedeckt mit einem Abdeckungskörper 4, welcher aus einer oberen Teilabdeckung 5 und einer unteren Teilabdeckung 6 besteht, zwischen denen eine Mittelnaht 7 verläuft. Der Abdeckungskörper 4 weist für beide Teilabdeckungen 5 und 6 je eine metallische Verstärkung 8 und 9 auf, welche sich von an der Armaturentafel 1 befindlichen Befestigungsstellen 10 und 11 bis jeweils zu der Mittelnaht 7 erstrecken. Die metallischen Verstärkungen 8 und 9 sind von einem Hartschaumkörper 12 zusammengehalten, über dessen nach außen weisende Seite eine dekorative Abdeckfolie 13 kaschiert ist. Die Abdeckfolie 13 ist an der Mittelnaht 7 mit einer Reißnaht 14 versehen, welche in an sich bekannter Weise durch Verringerung des Querschnittes im Nahtverlauf oder durch partielle Perforierung beim Formen der Abdeckfolie 13 hergestellt ist. Entlang der Mittelnaht 7 ist auch der Hartschaumkörper 12 in seiner Wandstärke durch eine Einkerbung 15 reduziert, und zwar über die gesamte Breite des Abdeckungskörpers 4. Dagegen erstreckt sich die Reißnaht 14 an der Folie 13 nur bis annähernd zu den seitlichen Rändern 16 des Abdeckungskörpers 4, so daß an jedem seitlichen Rand 16 ein Bereich 17 verbleibt, in dem zwar der Hartschaumkörper 12 vorzugsweise von der Rückseite des Abdeckungskörpers 4 her eingekerbt ist, die Abdeckfolie 13 hingegen nicht geschwächt ist. Vorzugsweise hat die Reißnaht 14 der Abdeckfolie 13 darüber hinaus in der Mitte der Abdeckung 4 ein Minimum an Reißfestigkeit. Dies kann relativ einfach beim Herstellen des Folienformteils verwirklicht werden, indem z. B. beim Einprägen der Reißnaht 14 im HF-Feld die Spaltmaße zwischen den Werkzeughälften entsprechend eingestellt werden oder aber Perforationen dichter aneinander liegen als zum Rand hin. Wenn der im Airbagmodul 3 im gefalteten Zustand befindliche Airbag aktiviert wird, dann drückt er beim Entfalten mit einer relativ großen Kraft auf die Rückseite des Abdeckungskörpers 4. Unter dieser Kraft bricht die Mittelnaht 7 zuerst an ihrer schwächsten Stelle, die annähernd in der Mitte des Abdeckungskörpers 4 liegt. Der sich weiter entfaltende Airbag bewirkt, daß die Mittelnaht 7 nach beiden Seiten zu den Rändern 16 des Abdeckungskörpers 4 hin aufreißt. Daher kann es trotz sorgfältiger Fertigung vorkommen, daß infolge von Material- und/oder Maßtoleranzen der Riß nach der einen Seite schneller als nach der anderen Seite verläuft. In einem solchen Falle wird der Bruchfortschritt an der schneller reißenden Seite am Ende der in der Abdeckfolie 13 vorgegebenen Reißnaht 14 verharren, da dort zum Weiterreißen mehr Kraft erforderlich ist als zum Reißen der Reißnaht 14 an der anderen langsamer reißenden Seite bis zum Ende der Reißnaht 14. Es verbleiben somit vor dem vollständigen Aufbrechen der Mittelnaht 7 die Bereiche 17 noch verbunden, die dann, da annähernd gleichstabil, relativ gleichzeitig aufbrechen. Die obere Teilabdeckung 5 wird dann um ein Biegescharnier 18 und die untere Teilabdeckung 6 um ein Biegescharnier 19 ohne störende Verzögerung an der einen oder anderen Seite aufklappen. Dem sich weiter entfaltenden Airbag ist so die Durchtrittsöffnung durch die Armaturentafel 1 freigegeben in einer Art, da er sich gleichmäßig und ohne seitliche Verspannungen und Verformungen in seine Gebrauchslage begibt.

Durch die Erfindung kann der Aufwand zur Führung des sich entfaltenden Airbags deutlich reduziert werden, ohne daß Nachteile gegenüber den bisher bekannten aufwendigeren Konstruktionen auftreten.

## Patentansprüche

1. Airbagabdeckung aus einem relativ starren Abdeckungskörper (4) und einer über diesem Abdeckungskörper angeordneten dekorativen Abdeckfolie (13), insbesondere einer Abdeckung, bei der die Ränder als Fuge zu der umliegenden Fläche, z. B. einer Armaturentafel (1), sichtbar sind und bei der nach Bersten einer Mittelnaht (7) durch den sich aufblähenden Airbag eine obere (5) und eine untere Teilabdeckung (6) um ein oberes (18) und ein unteres Biegescharnier (19) aufschwenken und zwischen sich eine Durchtrittsöffnung für den Airbag freigeben, **dadurch gekennzeichnet,** daß die Mittelnaht (7) einerseits durch eine in der Abdeckfolie (13) durch Schwächung ihres Querschnittes eingebrachte Reißnaht (14) und andererseits durch eine gleichsinnig mit der Reißnaht (14) verlaufende Einkerbung (15) in den Abdeckungskörper (4) gebildet ist, wobei die Reißnaht (14) nur annähernd bis zu den seitlichen Rändern (16) des Abdeckungskörpers (4) verläuft und so an jedem seitlichen Rand (16) des Abdeckungskörpers (4) ein schmaler Bereich (17) ohne Reißnaht (14) verbleibt.

2. Airbagabdeckung nach Anspruch 1, **dadurch gekennzeichnet,** daß die Reißnaht (14) und/oder die Einkerbung (15) in der Mitte des Abdeckungskörpers (4) gegenüber dem übrigen Verlauf mit geringerer Reiß- bzw. Bruchfestigkeit ausgeführt sind.
